# DEMANDE DE BREVET EUROPEEN

(11) **EP 2 085 721 A1**
(43) Date de publication de la demande: **05.08.2009**
(21) Numéro de dépôt: 09001375.6
(22) Date de dépôt: 02.02.2009
(51) Int. Cl.: F25B 29/00, F24D 17/02

(54) **Dispositif thermodynamique multi-énergie à production simultanée d'eau chaude, eau tiède, eau froide et électricité**

(30) Priorité: 04.02.2008 FR 0800590; 18.07.2008 FR 0804096
(71) Demandeur: Mobile Comfort Holding, 01700 Neyron (FR)
(72) Inventeur: Moreau, Christian, 01700 Neyron-France (FR)
(74) Mandataire: Schmidt, Martin Peter

(57) **Abrégé**

Système permettant la production simultanée d'eau très chaude (9), d'eau chaude (14), d'eau froide (13) et d'électricité (20) et comprenant un générateur de courant alternatif, une pompe à chaleur (3), et au moins un accumulateur électrique (19), ladite pompe à chaleur comprenant un compresseur (17) de fluide frigorigène, un premier échangeur de chaleur (11) situé à l'aspiration du compresseur (17) lorsque le système (1) est en mode climatisation, un détendeur (10), et un second échangeur de chaleur (12) placé au refoulement du compresseur (17) lorsque le système est en mode climatisation, le compresseur (17) étant entraîné par un moteur électrique alimenté par l'alternateur (18), et la pompe à chaleur comprenant en outre un troisième échangeur de chaleur (15) pour la production d'eau chaude (14).

## Description

### Domaine de l'invention

L'invention concerne un système ou dispositif comportant une pompe à chaleur actionnée par un générateur de courant alternatif permettant la production simultanée d'eau chaude par exemple pour le chauffage de bâtiments, d'eau très chaude, par exemple de l'eau chaude sanitaire, et d'eau froide, par exemple pour la climatisation.

### Etat de la technique

On connaît des systèmes composés de pompes à chaleur actionnées par des moteurs à combustion interne. Ces systèmes sont couramment utilisés au Japon depuis plusieurs années pour la climatisation (refroidissement) l'été et le chauffage l'hiver de bâtiments tels que des immeubles de bureau ou des hôtels, et la production simultanée d'eau chaude sanitaire. Ces systèmes sont la plupart du temps des systèmes dits à détente directe c'est-à-dire qu'ils envoient directement un fluide frigorigène vers des unités intérieures individuelles. Ce sont généralement des installations de type VRV (volume de réfrigérant variable) ou DRV (débit de réfrigérant variable).

De tels systèmes permettent la production d'eau chaude, par exemple l'eau chaude sanitaire, grâce à l'utilisation de la chaleur dégagée par le moteur à combustion en fonctionnement. Cependant l'un des inconvénients majeurs de ces systèmes est que la pompe à chaleur ne peut pas fonctionner correctement en prélevant les calories nécessaire sur l'air extérieur lorsque la température extérieure est inférieure à environ 10°C car cela entraîne le givrage de l'évaporateur. Dans la pratique, en hiver, la chaleur du moteur est utilisée pour réchauffer l'évaporateur afin de permettre au système thermodynamique de continuer à fonctionner avec un bon rendement lorsque la température extérieure est inférieure à 10°C (jusqu'à environ -20°C), l'inconvénient étant dans ce cas que l'on ne produit plus d'eau très haute température et le rendement global du système devient assez faible.

D'autre part les systèmes existants ont des puissances limitées à des valeurs maximales de l'ordre de 75 kW car ils utilisent des moteurs automobiles de puissance limitée, et des composants frigorifiques ne permettant pas non plus de fonctionner à des puissance plus élevées.

### Objet de l'invention

Un premier objet est un système 1 permettant la production simultanée d'eau très chaude 9 à température T2, d'eau chaude 14 à température T1, d'eau froide 13 à température T3 et d'électricité 20 et comprenant un générateur de courant alternatif, sélectionné dans le groupe constitué par un moteur à combustion 2 relié à un alternateur 18, une pile à combustible 22 reliée à un convertisseur de courant continu en courant alternatif 24, un panneau solaire photovoltaïque 23 relié à un convertisseur de courant continu en courant alternatif 24, et comprenant également une pompe à chaleur 3, et au moins un accumulateur électrique 19, ladite pompe à chaleur comprenant un compresseur 17 de fluide frigorigène, un premier échangeur de chaleur 11 situé à l'aspiration du compresseur 17 lorsque le système 1 est en mode climatisation, un détendeur 10, et un second échangeur de chaleur 12 placé au refoulement du compresseur 17 lorsque le système 1 est en mode climatisation,

Ledit système étant caractérisé en ce que
(a) le compresseur 17 est entraîné par un moteur électrique alimenté par le générateur de courant alternatif,
   et
(b) en ce que la pompe à chaleur 3 comprend en outre un troisième échangeur de chaleur 15 situé au refoulement du compresseur 17 lorsque le système 1 est en mode climatisation et utilisé pour le chauffage de l'eau chaude 14.

### Description des figures

La figure 1 représente un schéma de principe du système selon l'invention, dans le cas où le générateur de courant alternatif est un moteur à combustion relié à un alternateur.

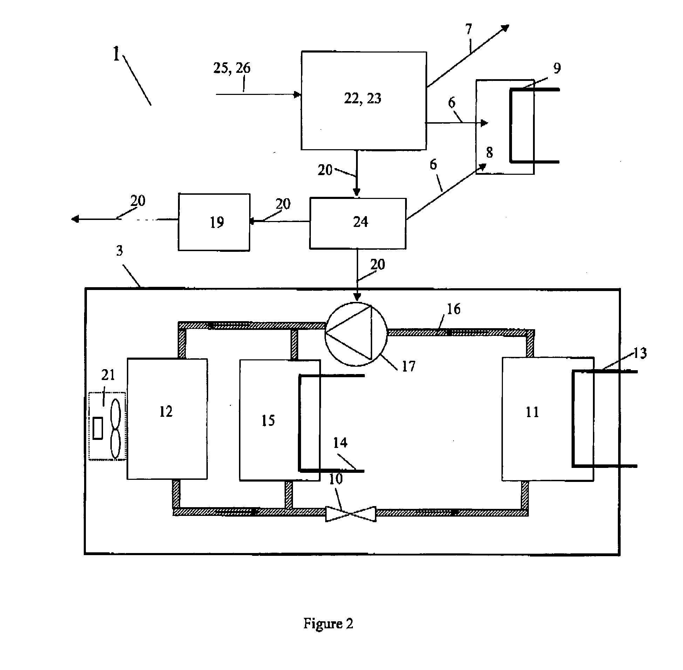

La figure 2 représente un schéma de principe du système selon l'invention, dans le cas où le générateur de courant alternatif est un panneau solaire photovoltaïque ou une pile à combustible, relié(e) à un convertisseur de courant continu en courant alternatif.
La figure 3 présente le rendement énergétique du système selon l'invention comparé aux rendements de divers systèmes de l'état de la technique.

### Liste des repères

- 1: Système selon l'invention
- 2: Moteur à combustion
- 3: Pompe à chaleur
- 4: Entrée de carburant liquide ou gazeux
- 5: Energie mécanique produite par le moteur
- 6: Chaleur émise par le générateur de courant alternatif en fonctionnement
- 7: Pertes d'énergie
- 8: Echangeur de chaleur pour l'échange de chaleur entre le générateur de courant alternatif et l'eau très chaude
- 9: Circuit d'eau très chaude
- 10: Détendeur
- 11: Echangeur de chaleur réversible - Condenseur en mode chauffage, échangeur sur la charge en mode chauffage
- 12: Echangeur de chaleur réversible - Evaporateur en mode chauffage, échangeur sur la source de chaleur en mode chauffage
- 13: Circuit d'eau - circuit d'eau froide lorsque la pompe à chaleur est en mode climatisation
- 14: Circuit d'eau chaude
- 15: Echangeur de chaleur
- 16: Circuit de fluide frigorigène
- 17: Compresseur
- 18: Alternateur
- 19: Accumulateur électrique
- 20: Energie électrique
- 21: Motoventilateur
- 22: Pile à combustible
- 23: Panneau solaire photovoltaïque
- 24: Convertisseur de courant continu en courant alternatif
- 25: Energie solaire
- 26: Combustible (pour la pile à combustible)

### Description de l'invention

### Définitions

Dans le présent document, on entend par
■ Système thermodynamique ou pompe à chaleur : ensemble comportant un compresseur et plusieurs échangeurs dans lesquels circule un fluide de transfert spécifique appelé usuellement fluide frigorigène.
■ Boucle géothermique : Ensemble de tuyauteries placé dans le sol typiquement en position verticale ou horizontale et destiné à échanger de la chaleur entre le système de chauffage ou de refroidissement et le sol.
■ Echangeur de chaleur : Dispositif destiné à transférer de la chaleur entre plusieurs circuits.
■ Fluide de transfert : fluide caloporteur utilisé pour transférer de la chaleur ; les exemples classiques sont le fluide frigorigène, l'eau ou l'eau glycolée parfois appelé saumure.
■ Source thermique ou source : Par convention, les termes source et charge thermique se réfèrent au mode chauffage. La source est le milieu d'où l'on extrait la chaleur en mode chauffage. Cette extraction de chaleur s'effectue avec certaines caractéristiques physiques comme l'inertie thermique ou la puissance disponible qui caractérisent la source. On peut noter que le terme source est impropre en mode refroidissement car on y rejette en fait de la chaleur issue du bâtiment.
■ Charge thermique ou charge : La charge est le milieu ou l'on rejette la chaleur en mode chauffage. Ce rejet de chaleur s'effectue avec certaines caractéristiques physiques comme l'inertie thermique ou la puissance disponible qui caractérisent la charge, de même la charge est le lieu d'où l'on retire la chaleur en mode refroidissement.
■ COP ou coefficient de performance : le COP ou coefficient de performance d'un système en mode chauffage est défini comme le rapport entre la puissance de chauffage disponible sur la puissance électrique consommée par le système. Dans le système selon l'invention, on entend par COP « équivalent électrique » le COP qu'aurait l'installation si on utilisait de l'électricité à la place du gaz ou biocarburant.
■ Générateur de courant alternatif : Dispositif qui génère du courant alternatif soit directement soit par l'intermédiaire d'un convertisseur additionnel qui transforme le courant continu généré en courant alternatif.
■ Moteur à combustion : Moteur qui, par combustion, transforme l'énergie chimique contenue dans un combustible en énergie mécanique.
■ Moteur à combustion interne : Moteur à combustion dont la combustion du combustible produisant l'énergie nécessaire au fonctionnement se passe dans le moteur lui-même, typiquement dans une chambre de combustion.
■ Panneau solaire photovoltaïque : Générateur électrique de courant continu constitué d'un ensemble de cellules photovoltaïques reliées entre elles électriquement.
■ Pile à combustible : Dispositif produisant de l'électricité grâce à l'oxydation sur une électrode d'un combustible réducteur (par exemple l'hydrogène) couplée à la réduction sur l'autre électrode d'un oxydant, tel que l'oxygène de l'air.

### Description détaillée

Le moteur à combustion 2 du système selon l'invention est de préférence un moteur à combustion interne. Il est alimenté de préférence par du gaz naturel. En fonction des besoins, il peut également être alimenté par d'autres carburants gazeux ou liquides tels que de l'essence, du fioul, du kérosène, de l'alcool, des biocarburants tels que des huiles végétales, du bioéthanol, du biogaz, des carburéacteurs.

Il peut s'agir aussi d'autres types de moteurs à combustion, tels que des moteurs à combustion externe comme les moteurs Sterling.

La pile à combustible 22 du système selon l'invention peut être n'importe quel type de pile à combustible connu de l'homme de métier, fonctionnant typiquement à des températures inférieures à 200°C, et alimentée par un combustible approprié, tel que l'hydrogène, le méthanol, le méthane ou un mélange hydrocarboné. On peut utiliser une pluralité de piles à combustible.

Les panneaux solaires photovoltaïque 23 du système selon l'invention peuvent être n'importe quel type de panneau connu de l'homme de métier, en particulier, le semi-conducteur constituant les cellules photovoltaïques peut être, de façon non limitative, du silicium amorphe, polycristallin ou monocristallin, un matériau organique semi-conducteur, ou une combinaison de ceux-ci. On peut utiliser une pluralité de panneaux solaires photovoltaïques.

Dans des modes de réalisations préférés, le système selon l'invention est réversible, à savoir il peut fonctionner en mode privilégiant le chauffage (« mode chauffage ») ou en mode privilégiant le refroidissement (« mode climatisation »). Pour ce faire, une vanne quatre voies d'inversion de cycle (non représentée) est installée sur le circuit de fluide frigorigène 16.

Dans le cas où la pompe à chaleur 3 est réversible, les échangeurs de chaleur 11 et 12 sont des échangeurs réversibles. Il convient de noter que nous avons choisi de décrire en détail le fonctionnement du système selon l'invention en mode climatisation. Lorsque la pompe à chaleur fonctionne en mode chauffage, le circuit d'eau 13 devient un circuit d'eau chaude.

D'autre part, l'échangeur de chaleur 11 est de préférence un échangeur multitubulaire.

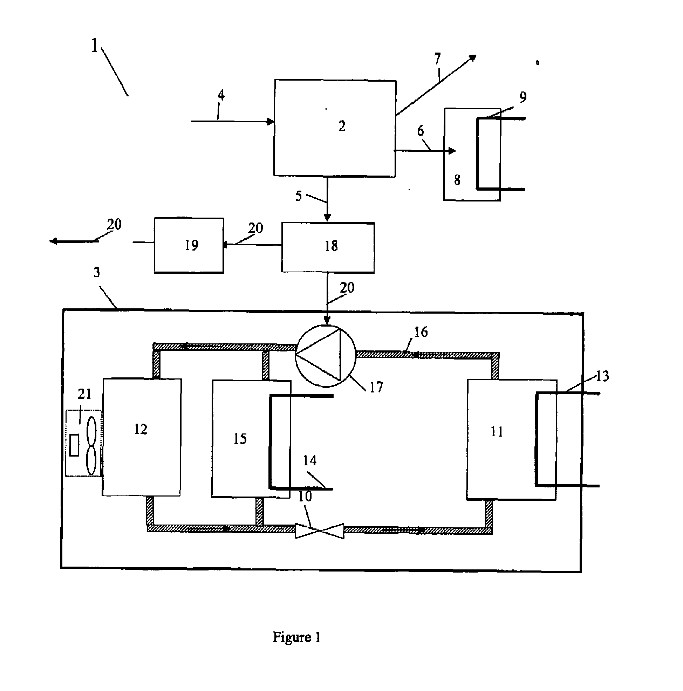

En référence à la figure 1, la pompe à chaleur 3 du système selon l'invention comprend
- un circuit fermé et étanche dans lequel circule un fluide de transfert tel qu'un fluide frigorigène 16,
- un compresseur 17 entraîné par un moteur électrique,
- un détendeur 10,
- un premier échangeur de chaleur 11, situé à l'aspiration du compresseur 17 lorsque le système fonctionne en mode climatisation,
- un second échangeur de chaleur 12, situé au refoulement du compresseur 17 lorsque le système fonctionne en mode climatisation.

Selon l'invention, le compresseur 17 est entraîné par un moteur électrique alimenté électriquement par le générateur de courant alternatif. Dans un mode de réalisation particulier, le compresseur 17 est entraîné par un moteur électrique alimenté électriquement par un moteur à combustion 2, l'électricité nécessaire étant générée par l'alternateur 18 entraîné par ledit moteur à combustion 2. Le fait d'utiliser un moteur électrique pour faire fonctionner le compresseur 17 (et notamment, le fait de ne pas entraîner le compresseur 17 directement (mécaniquement) par le moteur à combustion 2) présente l'avantage de pouvoir utiliser des compresseurs hermétiques, évitant ainsi les risques de fuite liés à l'utilisation des compresseurs ouverts.

Pour les raisons mentionnées ci-dessus, le compresseur de la pompe à chaleur est de préférence un compresseur hermétique. On entend par compresseur hermétique un compresseur composé d'un boîtier fermé, en général une enveloppe d'acier soudé, à l'intérieur duquel se trouvent une unité de compression pour compresser le fluide frigorigène, et un moteur qui entraîne l'unité de compression. On peut toutefois également employer des compresseurs semi-hermétiques, dans lesquels on peut avoir accès à certains organes internes lors de l'entretien ou d'éventuelles réparations.

La pompe à chaleur du système selon l'invention est dotée en outre d'un troisième échangeur de chaleur 15. Cet échangeur est de préférence (comme le second échangeur de chaleur 11) un échangeur multitubulaire.

Dans la présente invention, le fluide frigorigène est de préférence choisi parmi les hydrofluorocarbures HFC (par exemple R134A, R407C, R404A & R410A) qui sont les plus courants. On peut également envisager d'utiliser les hydrocarbures, et plus particulièrement le propane en tant que fluide frigorigène. On peut aussi utiliser le CO₂. Un fluide réfrigérant préféré pour le système de la présente invention est le R134A.

La pompe à chaleur 3 du système 1 selon l'invention permet l'utilisation de tous les types de charges thermiques connues de l'homme de métier pour le chauffage et la climatisation, telles que les planchers chauffants rafraîchissants, les ventilo-convecteurs. Les charges peuvent également être des centrales de traitement d'air pour la déshumidification des piscines et le traitement de l'air neuf des locaux, ou des circuits d'eau de procédés industriels nécessitant l'utilisation d'eau chaude et/ou d'eau froide.

La pompe à chaleur 3 du système 1 selon l'invention peut être une pompe à chaleur de type air/eau, c'est-à-dire une pompe à chaleur utilisant l'air extérieur et/ou l'air extrait comme source de chaleur en mode chauffage ou bien une pompe à chaleur de type eau/eau, c'est-â-dire une pompe à chaleur utilisant un circuit d'eau dans le sol extérieur comme source de chaleur en mode chauffage. Une source thermique avantageuse pour la pompe à chaleur 3 est une boucle géothermique.

Les échangeurs de chaleur sur la source et sur la charge sont adaptés au type de pompe à chaleur et au type d'application selon les critères bien connus de l'homme de métier.

Le système selon l'invention permet simultanément :
- Le refroidissement d'eau par la pompe à chaleur 3,
- Le chauffage d'eau à haute température par la pompe à chaleur 3,
- La production d'eau à très haute température par récupération de l'énergie thermique dégagée par le générateur de courant alternatif (qui peut être un moteur à combustion 2 relié à un alternateur 18) en cours de fonctionnement,
- La production d'électricité.

Il est à noter que le système selon l'invention permet également la production d'un seul ou de deux ou de trois éléments choisis parmi l'eau froide, l'eau chaude, l'eau très chaude et l'électricité.

L'eau dite chaude produite par la pompe à chaleur 3 a une température T1 typiquement comprise entre 20 et 60°C, et de préférence comprise entre 30 et 60°C.

L'eau dite très chaude (typiquement de l'eau chaude sanitaire) atteint une température T2>T1 typiquement comprise entre 40 et 75°C, et de préférence 55 et 75°C.

Lorsque le générateur de courant alternatif est un moteur à combustion associé à un alternateur, la chaleur est récupérée à la fois sur le circuit de refroidissement du moteur à combustion 2 et sur les gaz d'échappement du moteur.

Lorsque le générateur de courant alternatif est une pile à combustible 22 associée à un convertisseur de courant continu en courant alternatif, la chaleur est récupérée sur le circuit de refroidissement de la pile à combustible 22 et/ou par un circuit d'échange thermique placé sur le convertisseur de courant.

Lorsque le générateur de courant alternatif est un panneaux solaire photovoltaïque 23 associé à un convertisseur de courant continu en courant alternatif, la chaleur est avantageusement récupérée par un circuit d'échange thermique placé sous les cellules photovoltaïques, et/ou par un circuit d'échange thermique placé sur le convertisseur de courant. Cela présente un rendement énergétique plus favorable que l'utilisation d'une résistance électrique pour chauffer l'eau.

L'eau dite froide est obtenue à une température T3<T1 typiquement comprise entre -5°C et +15 °C et de préférence -4 et +12°C.

Dans un mode de réalisation avantageux, T1 est compris entre 20°C et 60°C, T2 > T1 est compris entre 40°C et 75°C, et T3 < T1 est compris entre -5°C et +15°C.

Le système 1 selon l'invention est en outre pourvu d'un système de régulation, de préférence électronique (non représenté). Ce système de régulation peut fonctionner avec plusieurs points de consignes, permettant ainsi d'enclencher la mise en fonctionnement du système selon l'invention en fonction des besoins en eau froide à température T3, et/ou eau chaude à température T1 et/ou eau très chaude à température T2.

En référence à la figure 1, le moteur 2 est alimenté en carburant par l'intermédiaire d'une entrée 4.

Typiquement, environ 34 à 37% de l'énergie fournie au moteur sous forme de carburant est récupérée sous forme d'énergie mécanique 5 pour entraîner l'alternateur 18, et produire de l'électricité 20. Cela permet d'alimenter le compresseur 17 de la pompe à chaleur 3 avec l'électricité 20 ainsi produite. Un éventuel surplus d'électricité produite par l'alternateur 18 dans le cas d'une charge partielle ou d'un dimensionnement à cet effet peut être utilisé pour recharger l'accumulateur électrique 19 ou être réinjectée sur le réseau.

En outre, l'électricité produite par le générateur de courant alternatif est utilisée pour faire fonctionner les éléments électriques et/ou électroniques du système selon l'invention, tels que des électrovannes, un ou plusieurs motoventilateurs 21 associés à l'échangeur de chaleur 12, et le système de régulation électronique. D'autre part, une partie de l'électricité produite par le générateur de courant alternatif peut être utilisée pour l'alimentation d'appareils ou de dispositifs électriques situés hors du système selon l'invention, tels que des éclairages par exemple.

Typiquement, lorsque le générateur de courant alternatif est un moteur à combustion 2, environ 40 à 60% de l'énergie fournie audit moteur 2 est récupérée sous forme d'énergie thermique 6 pour chauffer l'eau chaude sanitaire. Le reste de l'énergie (typiquement entre 3 et 25%) étant dissipée sous forme de pertes 7.

En référence toujours à la figure 1, et en considérant le mode climatisation, la pompe à chaleur 3 dont le compresseur 17 est alimenté en électricité 20 produite par le générateur de courant alternatif fournit de l'eau froide 13, avec un COP « climatisation » compris entre 2,9 et 3,5. Le système fournit également et simultanément de l'eau chaude 14, avec un COP chauffage compris entre 3 et 5.

En outre, lorsque le générateur de courant alternatif est un moteur à combustion, au moins un échangeur de chaleur 8 placé sur le moteur à combustion 2 permet de récupérer la chaleur 6 émise par le moteur 2.

De préférence, au moins un échangeur de chaleur (non représenté) est placé sur le circuit des gaz d'échappement du moteur, et au moins un second échangeur de chaleur (non représenté) est placé sur le circuit de refroidissement liquide du moteur 2.

D'autre part, pour résoudre les problèmes liés au givrage de l'évaporateur, c'est-à-dire de l'échangeur de chaleur 12 sur la source de chaleur en mode chauffage, lorsque les températures extérieures sont basses, c'est-à-dire typiquement inférieures à 5°C, de l'eau très chaude à température T2 produite par la récupération de la chaleur du générateur de courant alternatif est envoyée dans l'échangeur 12 si non utilisée pour le réchauffer.

Afin de pallier l'éventuel manque de puissance lors de besoins importants d'utilisation d'eau chaude au moins une résistance électrique est en outre installée sur l'échangeur de chaleur 11.

Les principaux avantages du système selon l'invention par rapport aux systèmes de l'état de la technique sont:
- Un fonctionnement jusqu'à une température de -20°C avec un bon rendement,
- Un COP équivalent électrique total supérieur à 6, même lorsque la température extérieure est basse.

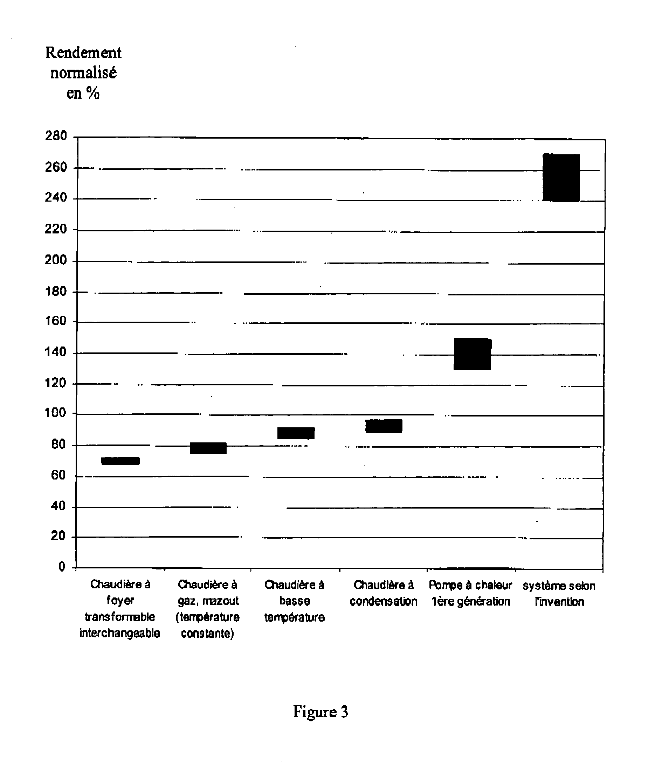

Comme on le voit sur la figure 3, le système selon l'invention possède un rendement supérieur à celui des systèmes de l'état de la technique, même récents, tels que les chaudières à gaz à condensation.

Ce bon rendement même à basse température extérieure est obtenu grâce au troisième échangeur de chaleur 15, placé dans le circuit de fluide frigorigène.

Ce bon rendement est également obtenu grâce à l'utilisation préférentielle d'échangeurs de chaleur multitubulaires.

Une puissance totale de 150 à 1500 kW est obtenue grâce à l'utilisation de moteurs à combustion de forte puissance, tels que des moteurs de camion, et grâce à l'utilisation de composants frigorifiques adaptés.

Le système selon l'invention peut être utilisé avantageusement dans des installations de balnéothérapie, thalassothérapie, dans des logements collectifs, pour le chauffage de piscines, dans des hôpitaux ou des maisons médicalisées, dans des hôtels ou résidences de tourisme.

Le système selon l'invention est également utilisé dans des procédés industriels nécessitant le chauffage et le refroidissement simultané d'eau, utilisée à des points différents du procédé. C'est le cas par exemple de certains procédés agroalimentaires.

## Revendications

1. Système (1) permettant la production simultanée d'eau très chaude (9) à température T2 (T2 étant préférentiellement compris entre 40°C et 75°C), d'eau chaude (14) à température T1 (T1 étant inférieure à T2 et préférentiellement compris entre 20°C et 60°C), d'eau froide (13) à température T3 (T3 étant inférieure à T1 et préférentiellement compris entre -5°C et +15°C) et d'électricité (20) et comprenant un générateur de courant alternatif, une pompe à chaleur (3), et au moins un accumulateur électrique (19), ladite pompe à chaleur comprenant un compresseur (17) de fluide frigorigène, un premier échangeur de chaleur (11) situé à l'aspiration du compresseur (17) lorsque le système (1) est en mode climatisation, un détendeur (10), et un second échangeur de chaleur (12) placé au refoulement du compresseur (17) lorsque le système (1) est en mode climatisation,
Ledit système étant **caractérisé en ce que**
(a) le compresseur (17) est entraîné par un moteur électrique alimenté par le générateur de courant alternatif,
et
(b) **en ce que** la pompe à chaleur (3) comprend en outre un troisième échangeur de chaleur (15) situé au refoulement du compresseur (17) lorsque le système (1) est en mode climatisation et utilisé pour le chauffage de l'eau chaude (14).

2. Système selon la revendication 1 **caractérisé en ce que** le générateur de courant alternatif est sélectionné dans le groupe constitué par un moteur à combustion (2) relié à un alternateur (18), une pile à combustible (22) reliée à un convertisseur de courant continu en courant alternatif (24), un panneau solaire photovoltaïque (23) reliée à un convertisseur de courant continu en courant alternatif (24).

3. Système selon la revendication 1 **caractérisé en ce que**
(i) Si le générateur de courant alternatif est un moteur à combustion (2) relié à un alternateur (18), l'alternateur (18) est placé entre le moteur à combustion (2) et le compresseur (17) de la pompe à chaleur (3), ledit alternateur (18) étant actionné par ledit moteur (2) et fournissant audit moteur électrique du compresseur (17) l'énergie électrique (20) nécessaire à son fonctionnement ;
(ii) Si le générateur de courant alternatif est une pile à combustible (22) ou un panneau solaire photovoltaïque (23) relié à un convertisseur (24) de courant continu en courant alternatif, ledit convertisseur (24) est placé entre la pile (22) ou le panneau photovoltaïque (23) et le compresseur (17) de la pompe à chaleur (3), et ledit convertisseur (24) fournissant audit moteur électrique du compresseur (17) l'énergie électrique (20) nécessaire à son fonctionnement.

4. Système selon une quelconque des revendications 1 à 3 dans lequel le moteur à combustion (2) est un moteur à combustion interne alimenté par du gaz naturel ou un carburant liquide, ou est un moteur à combustion externe tel qu'un moteur Stirling.

5. Système selon une quelconque des revendications 1 à 4 **caractérisé en ce que** la pompe à chaleur (3) est une pompe à chaleur réversible et les échangeurs de chaleur (11) et (12) sont des échangeurs réversibles.

6. Système selon une quelconque des revendications 1 à 5 **caractérisé en ce que** l'échangeur de chaleur (11) comporte en outre au moins une résistance électrique.

7. Système selon l'une quelconque des revendications 1 à 6 **caractérisé en ce que** les échangeurs de chaleur (11) et (15) sont des échangeurs multitubulaires.

8. Système selon l'une des revendications 1 à 7 **caractérisé en ce que** le fluide frigorigène est un hydrofluorocarbure.

9. Système selon l'une quelconque des revendications 1 à 7 **caractérisé en ce que** le fluide frigorigène est le CO₂,

10. Système selon l'une quelconque des revendications 1 à 9 **caractérisé en ce que** l'électricité (20) produite par le générateur de courant alternatif est utilisée en outre pour l'alimentation d'appareils ou de dispositifs électriques situés hors du système.

11. Utilisation du système selon l'une des revendications 1 à 10 dans des installations de balnéothérapie, thalassothérapie, dans des logements collectifs, pour le chauffage de piscines, dans des hôpitaux ou des maisons médicalisées, dans des hôtels ou résidences de tourisme.

12. Utilisation du système selon l'une des revendications 1 à 10 dans des procédés ou installations industriels nécessitant le chauffage et le refroidissement simultané d'eau, utilisée à des points différents dudit procédé ou de ladite installation.

13. Utilisation selon la revendication 11 ou 12, dans laquelle :
a) T3 < T1 ; et
b) T3 est compris entre -5°C et + 15°C, et de préférence entre -4°C et + 12°C.

14. Utilisation selon la revendication 11 ou 12, dans laquelle :
a) T1 est compris entre 20°C et 60°C, et de préférence entre 30°C et 60°C, et
b) T2 est compris entre 40°C et 75°C, et de préférence entre 55°C et 75°C, et
c) T2 > T1.

15. Utilisation selon la revendication 14, dans laquelle T3 est compris entre -5°C et + 15°C.
